# EUROPÄISCHE PATENTSCHRIFT

(11) **EP 1 158 223 B1**
(45) Veröffentlichungstag und Bekanntmachung des Hinweises auf die Patenterteilung: **24.03.2004**
(21) Anmeldenummer: 01110654.9
(22) Anmeldetag: 02.05.2001
(51) Int. Cl.: F16J 15/08

(54) **Zylinderkopfdichtung**
Cylinder head gasket
Joint de culasse

(30) Priorität: 23.05.2000 DE 10025400; 20.09.2000 DE 10046502
(43) Veröffentlichungstag der Anmeldung: 28.11.2001
(73) Patentinhaber: ElringKlinger AG, 72581 Dettingen (DE)
(72) Erfinder: Hegmann, Oliver, 65462 Ginsheim (DE); Böhm, Klaus, 65510 Idstein (DE); Path, Siegbert, 65549 Limburg (DE)
(74) Vertreter: Hoeger, Stellrecht & Partner

(56) Entgegenhaltungen:
- DE-A- 19 809 755

## Beschreibung

Die Erfindung betrifft eine Zylinderkopfdichtung für einen einen Kettenkasten aufweisenden Mehrzylindermotor mit einem Motorblock, einem Zylinderkopf sowie einem Kettenkastenteil, welches nach dem zwischen Motorblock und Zylinderkopf erfolgenden Einspannen der auch der Abdichtung des Kettenkastens dienenden Zylinderkopfdichtung am Motor angebracht wird, wobei die Zylinderkopfdichtung eine eine Ebene definierende längliche Dichtungsplatte aufweist und der Motor Führungsmittel besitzt, durch welche das Kettenkastenteil im Zuge seiner Montage in Längsrichtung der Dichtungsplatte parallel zur Dichtungsplattenebene verschiebbar geführt wird; die Zylinderkopfdichtung, mit welcher sich die Erfindung befaßt, weist eine Gruppe von Brennraumöffnungen, eine zwischen dieser Gruppe und einer Schmalseite der Dichtungsplatte angeordnete Kettenkastenöffnung, einen zwischen der letzteren und dieser Schmalseite der Dichtungsplatte angeordneten Dichtungsplatten-Randstreifen sowie dem Durchtritt von Zylinderkopfschrauben dienende Schraubenöffnungen auf, und insbesondere wird die Dichtungsplatte im wesentlichen von einer oder mehreren Metallblechlagen gebildet.

Bei Motoren der vorstehend definierten Art kann der Kettenkasten von einem neben dem Zylinderkopf angeordneten Kettenkasten-Oberteil und einem neben dem Motorblock bzw. Kurbelgehäuse angeordneten Kettenkasten-Unterteil gebildet werden; es gibt aber auch Konstruktionen, bei denen der obere Teil des Kettenkastens vom Zylinderkopf gebildet wird, so daß letzterer den Motorblock und ein Kettenkasten-Unterteil übergreift, oder bei denen der untere Teil des Kettenkastens vom Motorblock gebildet wird, über dem der Zylinderkopf und ein Kettenkasten-Oberteil angeordnet sind. In allen diesen Fällen ergibt sich in mindestens einer der Dichtflächen, zwischen denen die Zylinderkopfdichtung eingespannt wird und die vom Zylinderkopf sowie gegebenenfalls einem Kettenkasten-Oberteil bzw. vom Motorblock und gegebenenfalls einem Kettenkasten-Unterteil gebildet werden, eine Stoßstelle zwischen zwei gegeneinander anliegenden Motorbauteilen, welche aufgrund von Fertigungstoleranzen zu Abdichtproblemen führen kann, welche anhand einer Motorkonstruktion mit separatem Kettenkasten-Oberteil und separatem Kettenkasten-Unterteil erläutert werden sollen:

Bei einem solchen Motor wird im Zuge der Motormontage üblicherweise zunächst das Kettenkasten-Unterteil mit dem Motorblock verschraubt, worauf die auch der Abdichtung des Kettenkastens dienende Zylinderkopfdichtung auf Motorblock und Kettenkasten-Unterteil aufgelegt und sodann der Zylinderkopf montiert und dabei die Zylinderkopfdichtung zwischen diesem und dem Motorblock eingespannt wird. Anschließend wird das Kettenkasten-Oberteil von der Seite her auf am Zylinderkopf vorgesehene und als Führungsmittel fungierende Paßstifte aufgeschoben und durch die Zylinderkopfdichtung hindurch mit dem Kettenkasten-Unterteil verschraubt sowie gegen die Zylinderkopfdichtung angezogen. Aufgrund von Fertigungs- und Montagetoleranzen kann sich in der gegen die eine Seite der Zylinderkopfdichtung anliegenden Dichtfläche im Bereich der Stoßstelle zwischen Motorblock und Kettenkasten-Unterteil eine Stufe ergeben, die dazu führt, daß der von der Oberseite des Kettenkasten-Unterteils gebildete Dichtflächenbereich um beispielsweise 0,2 ± 0,2 mm, d. h. bis zu 0,4 mm tiefer liegt als der von der Oberseite des Motorblocks gebildete Dichtflächenbereich; da die Montage des Kettenkasten-Oberteils auf Paßstiften und damit sehr genau erfolgt, ist das auf Fertigungstoleranzen zurückzuführende Risiko der Bildung einer nennenswerten Stufe in der anderen Dichtfläche sehr viel geringer, wenn auch nicht ausgeschlossen - auf jeden Fall ist jedoch die Höhe einer gegebenenfalls in der von Zylinderkopf und Kettenkasten-Oberteil gebildeten Dichtfläche vorhandenen Stufe deutlich geringer als die Höhe der in der anderen Dichtfläche gegebenenfalls vorhandenen Stufe.

Um den Dichtspalt zwischen den beiden vorstehend erwähnten Dichtflächen auch im Falle des Vorhandenseins solcher Stufen zuverlässig abzudichten, und zwar auch um den Kettenkasten herum, dessen Hohlraum nicht ausschließlich im Kettenkasten-Oberteil und Kettenkasten-Unterteil ausgebildet ist, sondern teilweise auch von seitlichen Flächen des Motorblocks und des Zylinderkopfs begrenzt wird, so daß die von den beiden vorstehend beschriebenen Stoßstellen, welche in Richtung senkrecht zur Dichtspaltebene exakt übereinander liegen, definierte Teilungsebene den Kettenkasten-Hohlraum durchquert, ist es bei Zylinderkopfdichtungen, deren Dichtungsplatte von einer oder mehreren Metallblechlagen gebildet wird, üblich, um den Kettenkasten-Hohlraum herum mit mindestens einer federelastischen Sicke abzudichten, welche auf beiden Hauptoberflächen der Zylinderkopfdichtung um den Kettenkasten-Hohlraum herum mindestens eine in sich geschlossene Linie definiert, längs der sich eine erhöhte spezifische Flächenpressung zwischen der Zylinderkopfdichtung und den beiden den Dichtspalt begrenzenden Dichtflächen ergibt. Bei einer Zylinderkopfdichtung, deren Dichtungsplatte nur eine einzige Metallblechlage aus federelastischem Material aufweist, kann es sich bei der Sicke beispielsweise um eine im Querschnitt ungefähr U-förmige sogenannte Vollsicke handeln, deren Sickenkamm auf der einen Seite der Zylinderkopfdichtung eine erste derartige Linie bildet und deren beide sogenannten Sickenfüße auf der anderen Dichtungsseite zwei solche Linien bilden; es kommt aber auch eine sogenannte Halbsicke in Frage, deren Querschnitt einer schrägen Stufe oder einem flachgezogenen Z entspricht und die dann zu beiden Seiten der Dichtung eine solche Linie bildet. Bei Zylinderkopfdichtungen, deren Dichtungsplatte mehrere, aufeinandergeschichtete Metallblechlagen aufweist, sind die Sicken in denjenigen Metallblechlagen ausgebildet, welche die beiden Hauptoberflächen der Dichtungsplatte bilden.

Zusätzlich zu solchen Sicken hat man Zylinderkopfdichtungen für derartige Motoren im Bereich der vorstehend beschriebenen Stufen bzw. Teilungsebene zu beiden Seiten des Kettenkasten-Hohlraums mit elastomeren Dichtelementen versehen, um die Stufen in den Dichtflächen zu überbrücken und im Bereich dieser Stufen zuverlässig abzudichten (siehe beispielsweise die DE-C-43 37 758 sowie die EP-B-0 701 051).

Bei den in Rede stehenden, einen Kettenkasten aufweisenden Motoren wird die Zylinderkopfdichtung im Bereich von Motorblock und Zylinderkopf in der Nachbarschaft des Kettenkasten-Hohlraums von dem Einspannen der Zylinderkopfdichtung dienenden Zylinderkopfschrauben durchquert. Der Kettenkasten-Hohlraum hat im Schnitt in der Ebene des durch die Zylinderkopfdichtung abzudichtenden Dichtspalts üblicherweise eine ungefähr rechteckige Form, wobei die Längsseiten dieses Rechtecks ungefähr quer zur Längsrichtung der länglichen Dichtungsplatte der Zylinderkopfdichtung verlaufen, und die den Kettenkasten-Hohlraum umschließende Sicke bzw. Sicken verläuft bzw. verlaufen zwischen der Kettenkastenöffnung der Zylinderkopfdichtung und deren Schraubenöffnungen für die dem Kettenkasten-Hohlraum benachbarten Zylinderkopfschrauben.

Wird nun nach der Montage des Kettenkasten-Unterteils (jedoch vor der Montage des Kettenkasten-Oberteils) die Zylinderkopfdichtung durch Anziehen der Zylinderkopfschrauben zwischen Motorblock und Zylinderkopf eingespannt, neigt infolge der elastischen Verformung der vorstehend beschriebenen Sicke bzw. Sicken die Dichtungsplatte der Zylinderkopfdichtung zu Verwerfungen mit der Folge, daß ein mittlerer Abschnitt eines zwischen der Kettenkastenöffnung und einem äußeren Schmalseitenrand der Dichtungsplatte liegenden Dichtungsplatten-Randstreifens zum Auswölben in Richtung auf den von dem noch zu montierenden Kettenkasten-Oberteil einzunehmenden Raum tendiert. Wird dann das Kettenkasten-Oberteil von der Seite her auf die am Zylinderkopf vorgesehenen Paßstifte aufgeschoben, besteht die Gefahr, daß der aufgewölbte Bereich des besagten Dichtungsplatten-Randstreifens beschädigt und dadurch das Abdichtvermögen der Zylinderkopfdichtung beeinträchtigt wird. Entsprechendes gilt für Zylinderkopfdichtungen für solche Motoren, welche nicht ein separates Kettenkasten-Oberteil und ein separates Kettenkasten-Unterteil, sondern nur ein separates Kettenkastenteil besitzen, welches dann nach dem Einspannen der Zylinderkopfdichtung von der Seite her auf Führungsmittel, wie auf Positionierstifte am Motorblock oder am Zylinderkopf, aufgeschoben wird.

De 19809755 A1 offenbart eine Zylinderkopfdichtung, wobei die Kettenkastenöffnung von einer Sicke umgeben ist, die in Richtung auf den noch zu montierenden Kettenkasten-Oberteil aufgebogen ist, aber wobei der äußere Randbereich des Randstreifenabschnitts nicht aus der Dichtungsplattenebene heraus in eine der vorgenannten Richtung entgegengesetzte Richtung abgebogen ist.

Die Erfindung betrifft also eine Zylinderkopfdichtung mit den Merkmalen des Oberbegriffs des Anspruchs 1, und Aufgabe der Erfindung war es, bei solchen Zylinderkopfdichtungen die Gefahr einer Beschädigung durch ein von der Seite her einzuschiebendes Kettenkastenteil zu beseitigen oder mindestens zu minimieren.

Diese Aufgabe wird erfindungsgemäß dadurch gelöst, daß der äußere Randbereich des vorstehend beschriebenen mittleren Randstreifenabschnitts der Dichtungsplatte aus der Dichtungsplattenebene heraus in eine Richtung abgebogen wird, welche von dem nachträglich anzubringenden separaten Kettenkastenteil weg weist. Dadurch wird die Gefahr vermieden oder zumindest minimiert, daß es nach dem Einspannen der Zylinderkopfdichtung zwischen Motorblock und Zylinderkopf beim Einschieben des noch zu montierenden Kettenkastenteils zu einer eine Beschädigung der Zylinderkopfdichtung hervorrufenden Kollision zwischen dieser und diesem Kettenkastenteil kommt.

Vorteilhafte Weiterbildungen der erfindungsgemäßen Zylinderkopfdichtung ergeben sich aus den Ansprüchen 2 bis 4.

Im folgenden wird die Erfindung anhand einer bevorzugten Ausführungsform einer erfindungsgemäßen Zylinderkopfdichtung noch näher erläutert, welche in den beigefügten Zeichnungen dargestellt ist; in diesen zeigen:
- Figur 1: eine Draufsicht auf einen Teil der Zylinderkopfdichtung, welcher zwei Brennraum-Durchgangsöffnungen sowie eine Kettenkastenöffnung der Dichtung umfaßt;
- Figuren 2 - 4: Schnitte nach den Linien 2-2, 3-3 und 4-4 in Figur 1;
- Figur 5: den in Figur 1 angedeuteten Ausschnitt "A" in größerem Maßstab, und
- Figur 6: einen Schnitt nach der Linie 6-6 in Figur 5, wobei in Figur 6 auch Teile eines Motorblocks, eines Zylinderkopfs, eines Kettenkasten-Oberteils und eines Kettenkasten-Unterteils eines zu der Dichtung gehörenden Motors angedeutet wurden.

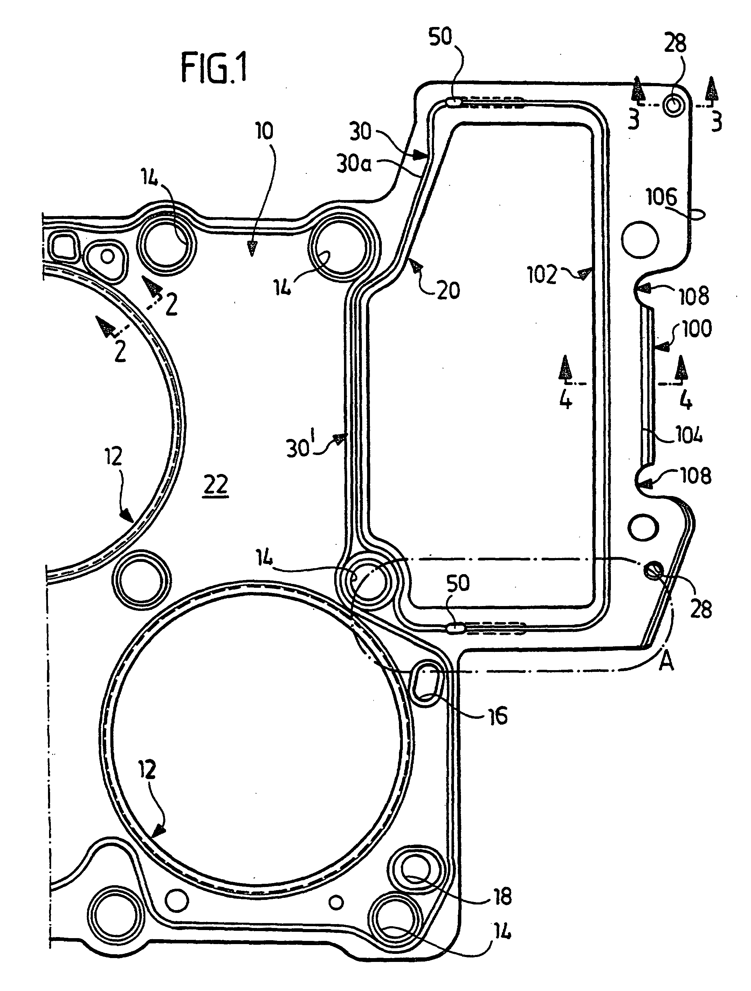

Die in Figur 1 teilweise dargestellte Zylinderkopfdichtung hat eine als Ganzes mit 10 bezeichnete Dichtungsplatte, in der eine Vielzahl von durch die Dichtungsplatte hindurchgehenden Öffnungen ausgebildet sind, so z. B. Brennraumöffnungen 12, Schraubenlöcher 14 für den Durchtritt von Zylinderkopfschrauben, und Wasser- bzw. Öllöcher 16 bzw. 18. Außerdem beinhaltet die Zylinderkopfdichtung eine Kettenkastenöffnung 20, um die herum Dichtflächen eines Kettenkasten-Oberteils und eines angrenzenden Zylinderkopfs sowie eines Kettenkasten-Unterteils und eines angrenzenden Motorblocks durch die Zylinderkopfdichtung gegeneinander abzudichten sind.

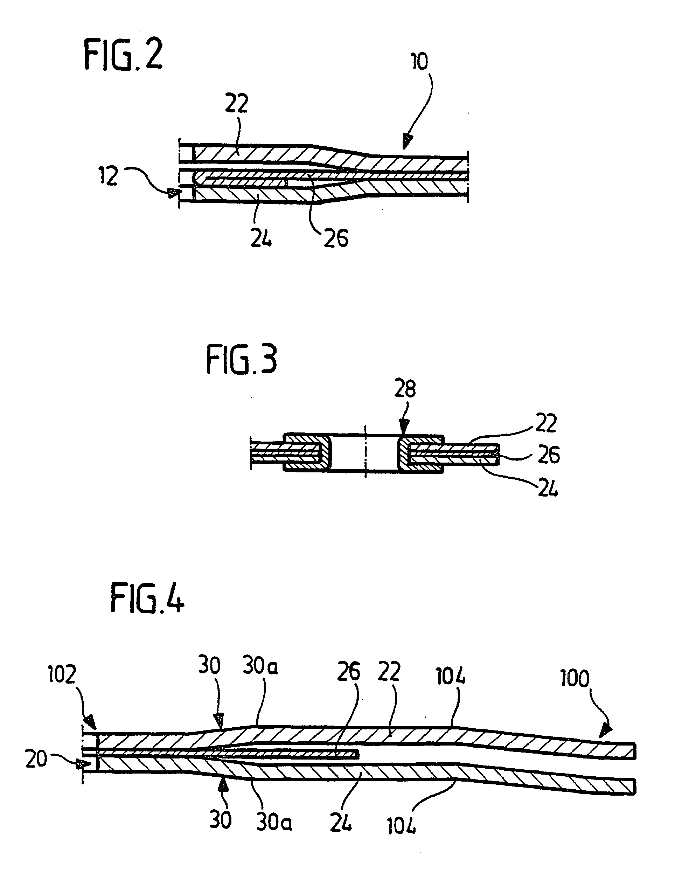

Wie z. B. die Figur 2 erkennen läßt, ist die Dichtungsplatte 10 dreilagig und umfaßt zwei mit Sicken versehene Außen- oder Decklagen 22 und 24 aus elastische Eigenschaften aufweisenden Stahlblechen sowie eine metallische Mittellage 26, welche um die Brennraumöffnungen 12 herum auf sich selbst zurückgefaltet wurde und deshalb üblicherweise als Bördelblechlage bezeichnet wird. An mehreren, dem Rand der Dichtungsplatte 10 benachbarten Stellen sind die drei Metallblechlagen 22, 24 und 26 durch Hohlniete 28 miteinander verbunden, so wie dies in Figur 3 näher dargestellt wurde.

Um die Kettenkastenöffnung 20 herum verläuft sowohl in der Außenlage 22, als auch in der Außenlage 24 jeweils eine Halbsicke 30 (siehe auch Figur 4), welche eine in sich geschlossene Sickenlinie bildet und deren Kamm mit 30a bezeichnet wurde.

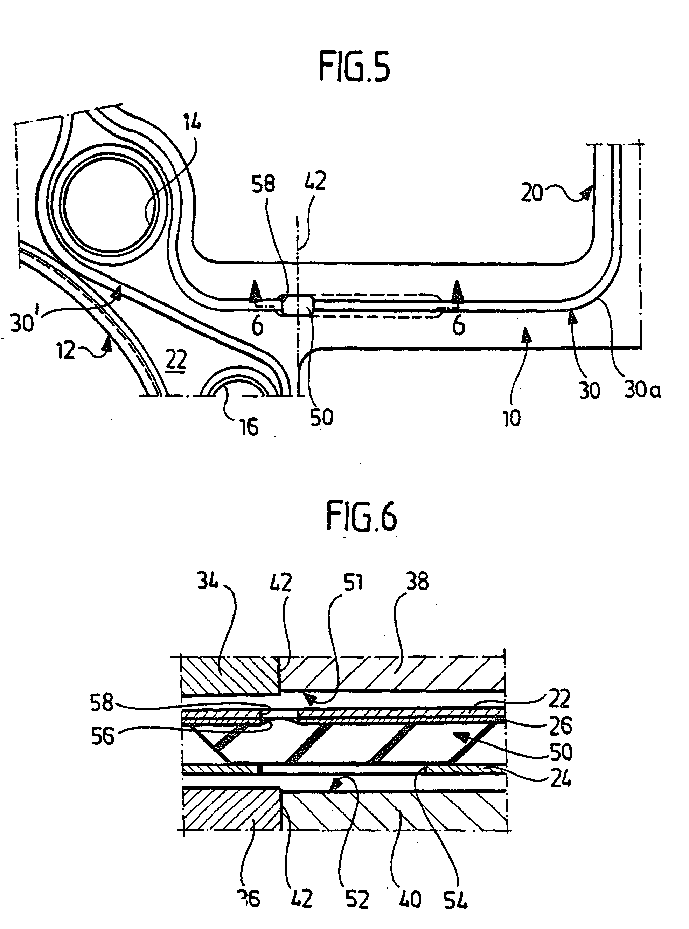

In Figur 6 sind die für die vorliegende Erfindung relevanten Motorbauteile angedeutet, wenn auch nur bereichsweise, nämlich ein Zylinderkopf 34, ein Motorblock 36, ein Kettenkasten-Oberteil 38 und ein Kettenkasten-Unterteil 40; die Stoßstellen, an denen der Zylinderkopf und das Kettenkasten-Oberteil bzw. der Motorblock und das Kettenkasten-Unterteil aneinandergrenzen (stumpf gegeneinander stoßen), wurden beide mit 42 bezeichnet, da bei der dargestellten Ausführungsform die beiden Stoß- oder Trennstellen exakt übereinanderliegen, weshalb sie in Figur 5 auch nur durch eine einzige strichpunktierte Linie angedeutet wurden.

Während im praktisch nur schwer realisierbaren Idealfall Zylinderkopf und Kettenkasten-Oberteil bzw. Motorblock und Kettenkasten-Unterteil durchgehende, ebene Dichtflächen bilden, zwischen denen die Zylinderkopfdichtung eingespannt wird, führen Fertigungs- und Montagetoleranzen oft dazu, daß die in Figur 6 mit 51 bzw. 52 bezeichneten Dichtflächen an den Stoßstellen 42 eine kleine Stufe bilden. Dabei ist die Stufe in der Dichtfläche 52 in der Regel deutlich größer bzw. höher als eine in der Dichtfläche 51 gegebenenfalls vorhandene Stufe, da die Montage des Kettenkasten-Oberteils 38 oft auf Paßstiften und damit sehr genau erfolgt. So kann die Dichtfläche 52 im Bereich des Kettenkasten-Unterteils 40 um 0,2 ± 0,2 mm, d. h. bis zu 0,4 mm, tiefer liegen als im Bereich des Motorblocks 36, weshalb man erfindungsgemäß auch die Höhe der von der Halbsicke 30 der unteren Außenlage 24 gebildeten "Stufe" deutlich größer wählt (z. B. 0,45 mm) als die Höhe der von der Halbsicke 30 der oberen Außenlage 22 gebildete "Stufe" (z. B. 0,25 mm).

Zu beiden Seiten der Kettenkastenöffnung 20 sind zwei im wesentlichen strang- oder raupenförmige Dichtelemente 50 angeordnet, und zwar neben den Schmalseiten der Kettenkastenöffnung, welche - in einer Draufsicht auf die Dichtung - unterhalb und zwischen den Halbsicken 30 bzw. Sickenkämmen 30a liegen. Zur Erzeugung der Dichtelemente 50 werden auf die Motorblock-seitige Oberfläche der Mittellage 26 zwei in ihrer Länge der Länge der Dichtelemente 50 entsprechende Raupen aus einem zunächst pastösen Dichtungsmaterial aufgetragen, welches sich insbesondere durch Erwärmen so verfestigen läßt, daß es zunächst außer elastischen auch noch plastische Eigenschaften und sodann nur noch elastische Eigenschaften aufweist. Wie sich der Figur 6 in Verbindung mit den Figuren 1 und 5 entnehmen läßt, weist die untere Außenlage 24 unter jedem Dichtelement 50 eine fensterartige Aussparung 54 auf, deren Gestalt einem Langloch bzw. einem langen, schmalen Rechteck entspricht, welches sich in Längsrichtung des benachbarten Dichtelements 50 erstreckt. Ferner haben die Mittellage 26 und die obere Außenlage 22 über jedem Dichtelement 50 jeweils eine weitere Aussparung 56 bzw. 58, wobei diese beiden gleichfalls fensterartigen Aussparungen vorzugsweise deckungsgleich übereinanderliegen und die Gestalt eines deutlich kürzeren Langlochs (im Vergleich zur Aussparung 54) besitzen. So haben bei einer bevorzugten Ausführungsform die Aussparungen 54, 56 und 58 die folgenden Abmessungen:
Aussparung 54: 3 x 23 mm.
Aussparungen 56, 58: 3 x 5 mm

Die Dichtelemente 50 sind um ein Vielfaches höher (gemäß Figur 6 vertikale Abmessung) als die Außenlagen 22 und 24 dick sind - bei einer bevorzugten Ausführungsform beträgt die Höhe der Dichtelemente 50 0,7 bis 0,9 mm, während die Blechstärke der Außenlagen 22 und 24 0,20 bis 0,25 mm beträgt.

Beim Auftragen des später die Dichtelemente 50 bildenden Dichtungsmaterials auf die Mittellage 26 kann das Dichtungsmaterial in die Aussparung 56 der Mittellage eintreten, so wie dies in Figur 6 angedeutet wurde. Die Dichtelemente 50 können bei ungepreßter Dichtung jedoch auch noch nicht in die Aussparungen 54 und 58 eingreifen, da zumindest die Lagen 24 und 26 der Dichtungsplatte 10 einen Abstand voneinander aufweisen können, solange die Dichtung nicht eingespannt, d. h. noch nicht gepreßt ist. Das Material der Dichtelemente 50 tritt erst beim Einbauen der Dichtung und beim Einspannen der Dichtung zwischen den Maschinenbauteil-Dichtflächen in die Aussparungen 54 und 58 ein und durch diese Aussparungen hindurch, so daß es über die beiden Hauptoberflächen der Dichtungsplatte 10 übersteht und gegen die Dichtflächen 51 und 52 angepreßt wird, und zwar gerade im Bereich der Stoßstellen 42. Dabei bildet das Dichtungsmaterial auf der Außenseite der Dichtungsplatte über der Aussparung 54 eine längliche, elastomere Rippe, welche gegen die Dichtfläche 52 angepreßt wird, während dank der geringen Unebenheiten der Dichtfläche 51 auf der Oberseite (gemäß Figur 6) der Dichtung ein kurzer, aus der Aussparung 58 austretender elastomerer Bereich der Dichtelemente 50 für eine zuverlässige Abdichtung ausreichend ist.

Beim Herstellen der Flachdichtung ist es ohne weiteres möglich, zur Herstellung der Dichtelemente 50 Dichtungsmaterial-Raupen auf die Mittellage 26 aufzutragen, und zwar hinsichtlich der Länge, der Breite und des Volumens dieser Raupen derart gesteuert, daß sich exakt die gewünschten Dichtelemente 50 ergeben. Selbstverständlich werden die Dichtungsmaterial-Raupen auf die Metallblechlage 26 aufgebracht, ehe die Lagen 22, 24, 26 zu der Dichtungsplatte 10 zusammengesetzt werden.

Wie die Fig. 1 zeigt, verlaufen die die Kettenkastenöffnung 20 umfassenden Sicken 30 in unmittelbarer Nachbarschaft von der Kettenkastenöffnung benachbarten Schraubenlöchern 14; gleiches gilt für Sicken 30', welche um die Gruppe von Brennraumöffnungen 12 sowie die Gruppe von Wasser- und Öllöchern 16 bzw. 18 herumlaufen. Die Sicken 30 und/oder die Sicken 30' haben nun Verwerfungen der Dichtungsplatte 10 zur Folge, wenn die Zylinderkopfdichtung bei noch fehlendem Kettenkasten-Oberteil 38 (durch Anziehen nicht gezeigter Zylinderkopfschrauben) zwischen dem Motorblock 36 und dem Zylinderkopf 34 eingespannt wird; dabei neigt infolge des noch fehlenden Kettenkasten-Oberteils 38 ein nach oben nicht abgestützter mittlerer Abschnitt 100 des in Fig. 1 gezeigten Dichtungsplatten-Randstreifens 102 zum Aufwölben nach oben, d. h. in Richtung auf den vom noch zu montierenden Kettenkasten-Oberteil 38 einzunehmenden Raum (siehe Fig. 6), was zur Folge haben könnte, daß beim Aufschieben des Kettenkasten-Oberteils 38 gemäß den Figuren 1 und 6 von rechts die gemäß Fig. 1 rechte freie Kante des Randstreifenabschnitts 100 mit dem Kettenkasten-Oberteil kollidiert und dabei die Zylinderkopfdichtung beschädigt wird.

Um dieses Risiko zu vermeiden, sind, wie in den Figuren 1 und 4 dargestellt, im Bereich des mittleren Randstreifenabschnitts 100 die äußeren Randbereiche der Außenlagen 22 und 24 längs einer Biegelinie 104 nach unten abgebogen - die Mittellage 26 endet schon vor dieser Biegelinie, wie die Fig. 4 erkennen läßt. Um dieses Abbiegen zu erleichtern, bildet, wie in Fig. 1 gezeigt, die Außenkante 106 der Dichtungsplatte 10 an beiden Enden des mittleren Randstreifenabschnitts 100 jeweils eine den äußeren Randbereich dieses Randstreifenabschnitts freigebende Einbuchtung 108, welche bis über die Biegelinie 104 hinaus in die Dichtungsplatte hineinragt. Nachzutragen ist noch, daß bei der dargestellten bevorzugten Ausführungsform die Biegelinie 104 ungefähr quer zur Längsrichtung der Dichtungsplatte 10 verläuft (wie aus Fig. 1 geschlossen werden kann, verläuft die Längsrichtung der Dichtungsplatte 10 gemäß Fig. 1 horizontal).

## Patentansprüche

1. Zylinderkopfdichtung für einen einen Kettenkasten aufweisenden Mehrzylinder-Motor mit einem Motorblock, einem Zylinderkopf sowie einem nach dem zwischen Motorblock und Zylinderkopf erfolgenden Einspannen der auch der Abdichtung des Kettenkastens dienenden Zylinderkopfdichtung zu montierenden Kettenkastenteil, wobei die Zylinderkopfdichtung eine eine Ebene definierende längliche Dichtungsplatte (10) und der Motor Führungsmittel aufweist, durch welche das Kettenkastenteil im Zuge seiner Montage in Längsrichtung der Dichtungsplatte (10) parallel zur Dichtungsplattenebene verschiebbar geführt ist, und wobei die Zylinderkopfdichtung eine Gruppe von Brennraumöffnungen (12), eine zwischen dieser Gruppe und einer Schmalseite der Dichtungsplatte (10) angeordnete Kettenkastenöffnung (20), einen zwischen der letzteren und dieser Schmalseite der Dichtungsplatte (10) angeordneten Dichtungsplatten-Randstreifen (102) sowie dem Durchtritt von Zylinderkopfschrauben dienende Schraubenöffnungen (14) aufweist, welche derart angeordnet sind, daß ein mittlerer Abschnitt des Dichtungsplatten-Randstreifens (102) beim Einspannen der Zylinderkopfdichtung zum Auswölben in Richtung auf den vom noch zu montierenden Kettenkastenteil einzunehmenden Raum tendiert, **dadurch gekennzeichnet, daß** der äußere Randbereich des mittleren Randstreifenabschnitts (100) aus der Dichtungsplattenebene heraus in eine der vorgenannten Richtung entgegengesetzte Richtung abgebogen ist.

2. Zylinderkopfdichtung nach Anspruch 1, **dadurch gekennzeichnet, daß** die Außenkante der Dichtungsplatte (10) an beiden Enden des mittleren Randstreifenabschnitts (100) eine den äußeren Randbereich des mittleren Randstreifenabschnitts freigebende Einbuchtung (108) bildet.

3. Zylinderkopfdichtung nach Anspruch 1 oder 2, **dadurch gekennzeichnet, daß** der äußere Randbereich des mittleren Randstreifenabschnitts (100) längs einer Biegelinie (104) abgebogen ist, welche ungefähr quer zur Längsrichtung der Dichtungsplatte (10) verläuft.

4. Zylinderkopfdichtung nach einem oder mehreren der vorstehenden Ansprüche, **dadurch gekennzeichnet, daß** die Dichtungsplatte (10) mehrere Metallblechlagen (22, 26, 24) umfaßt, wobei die im äußeren Randbereich des mittleren Randstreifenabschnitts (100) der Dichtungsplatte (10) vorhandenen Metallblechlagen (22, 24) sämtlich abgebogen sind.

## Claims

1. Cylinder head gasket for a multicylinder engine comprising a chain case, an engine block, a cylinder head and a chain case part which is to be mounted after the cylinder head gasket, which also serves to seal the chain case, has been clamped between engine block and cylinder head, the cylinder head gasket having an elongate gasket plate (10) defining a plane, and the engine having guide means for guiding the chain case part in the course of assembly thereof for displacement in the longitudinal direction of the gasket plate (10) parallel to the plane of the gasket plate, and the cylinder head gasket having a group of combustion chamber openings (12), a chain case opening (20) arranged between this group and a narrow side of the gasket plate (10), a gasket plate edge strip (102) arranged between the chain case opening and this narrow side of the gasket plate (10), and screw openings (14) for the passage of cylinder head screws therethrough, said screw openings being arranged such that when clamping the cylinder head gasket, a centre portion of the gasket plate edge strip (102) tends to arch in the direction towards the space which is to be accommodated by the chain case part which has still to be mounted, **characterized in that** the outer edge area of the centre portion of the edge strip is bent out of the plane of the gasket plate in a direction opposite to the aforesaid direction.

2. Cylinder head gasket as defined in claim 1, **characterized in that** the outer edge of the gasket plate (10) forms at both ends of the centre portion (100) of the edge strip an indentation (108) exposing the outer edge area of the centre portion of the edge strip.

3. Cylinder head gasket as defined in claim 1 or 2, **characterized in that** the outer edge area of the centre portion (100) of the edge strip is bent along a bending line (104) extending approximately transversely to the longitudinal direction of the gasket plate (10).

4. Cylinder head gasket as defined in any one or several of the preceding claims, **characterized in that** the gasket plate (10) comprises several sheet metal layers (22, 26, 24), and the sheet metal layers (22, 24) present in the outer edge area of the centre portion (100) of the edge strip of the gasket plate (10) are all bent.

## Revendications

1. Joint de culasse pour un moteur à plusieurs cylindres comprenant un carter de chaînes, comprenant un support du moteur, une culasse ainsi qu'une partie du carter de chaînes destinée à être montée après que le joint de culasse servant également à étanchéifier le carter de chaînes ait été serré entre le support du moteur et la culasse, le joint de culasse comprenant un joint plat (10) longitudinal définissant un plan et le moteur comprenant des moyens de guidage, grâce auxquels la partie du carter de chaînes est guidée de manière à pouvoir être déplacée au cours de son montage dans la direction longitudinale du joint plat (10) parallèlement au plan du joint plat, et le joint de culasse comprenant un groupe d'orifices de la chambre de chauffe (12), un orifice du carter de chaînes (20) disposé entre ce groupe et un côté étroit du joint plat (10), une bande latérale du joint plat (102) disposée entre ledit orifice et ce côté étroit du joint plat (10), ainsi que des orifices de vis servant au passage de vis de culasse, lesquels orifices sont disposés de telle sorte qu'une section centrale de la bande latérale du joint plat (102), lorsque le joint de culasse est serré, ait tendance à bomber en direction de l'espace destiné à être occupé par la partie du carter de chaînes restant encore à monter, **caractérisé en ce que** la zone latérale extérieure de la section de bande latérale (100) centrale est pliée hors du plan du joint plat dans une direction opposée à la direction précédemment citée.

2. Joint de culasse selon la revendication 1, **caractérisé en ce que** l'arête extérieure du joint plat (10) forme des deux côtés de la section de bande latérale (100) centrale un creux (108) libérant la zone latérale extérieure de la section de bande latérale centrale.

3. Joint de culasse selon la revendication 1 ou 2, **caractérisé en ce que** la zone latérale extérieure de la section de bande latérale (100) centrale est pliée le long d'une ligne de pliure (104), laquelle s'étend transversalement à la direction longitudinale du joint plat (10).

4. Joint de culasse selon l'une ou plusieurs des revendications précédentes, **caractérisé en ce que** le joint plat (10) comprend plusieurs couches de tôle métallique (22, 26, 24), les couches de tôle métallique (22, 24) présentes dans la zone latérale extérieure de la section de bande latérale (100) centrale du joint plat (10) étant pliées ensemble.
